# EUROPEAN PATENT APPLICATION

(11) **EP 1 814 004 A1**
(43) Date of publication of application: **01.08.2007**
(21) Application number: 07100783.5
(22) Date of filing: 19.01.2007
(51) Int. Cl.: G05B 19/418

(54) **Steam turbine Fieldbus/Profibus architecture based automation system**

(30) Priority: 20.01.2006 IT TO20060038
(71) Applicant: ANSALDO ENERGIA S.P.A., 16152 Genova (IT)
(72) Inventor: Bima, Carlo, 16157 Genova (IT); Cagliani, Flavio, 16129 Genova (IT)
(74) Representative: Jorio, Paolo

(57) **Abstract**

There is described a control system (1) for a steam turbine (2), having a number of sensors (3), each for acquiring at least one characteristic operating quantity of the turbine (2), and for generating a respective first digital electric signal indicating the quantity; a number of actuators (4) for regulating the turbine; electronic processing means (6) for generating, on the basis of the first digital electric signals, second digital electric signals for controlling the actuators; and transmission means (7) for transmitting the first and second digital electric signals, and interposed between the sensors, the actuators, and the electronic processing means; the control system being characterized in that the transmission means (7) have a first data bus configured to transmit the first digital electric signals to the electronic processing means (6), and a second data bus configured to transmit the second digital electric signals to the actuators (4).

## Description

The present invention relates to a turbine, in particular a steam turbine, control system.

As is known, steam turbine control systems provide for controlling the various operating phases of the turbine by controlling various turbine-connected auxiliary systems, e.g. the system regulating oil lubrication of the moving parts of the turbine, the steam seal regulating system, drainage system, lifting and inching system, actuating oil system, etc., by controlling electric user devices, such as motors, fans, powered valves, etc., connected to the auxiliary systems, and by controlling the steam feed valve actuators.

For this purpose, known steam turbine control systems are normally connected to sensors connected to the turbine to acquire turbine operating parameter signals, on the basis of which the control system executes various algorithms for regulating the auxiliary systems and electric user devices and controlling the actuators connected to the turbine.

Known steam turbine control systems are normally connected to the turbine-connected sensors and to the electric user devices by so-called "wire to wire" connections.

In this type of connection, the cables connected to the sensors are connected to one or more so-called junction boxes located close to the turbine, and to which are also connected all the cables from the turbine control system automation cabinets, normally located in the control room.

In this type of configuration, the electric user devices are connected by various coaxial cables directly to the control system automation cabinets, without going through the junction boxes.

The wire-to-wire connections used to connect the sensors to the turbine control system involve a considerable amount of work, on account of the number of connections involved, and are a frequent source of malfunctioning of the turbine control system caused by wiring errors.

It is an object of the present invention to provide a steam turbine control system, which is reliable, and an improvement over known control systems.

According to the present invention, there is provided a steam turbine control system as claimed in Claim 1.

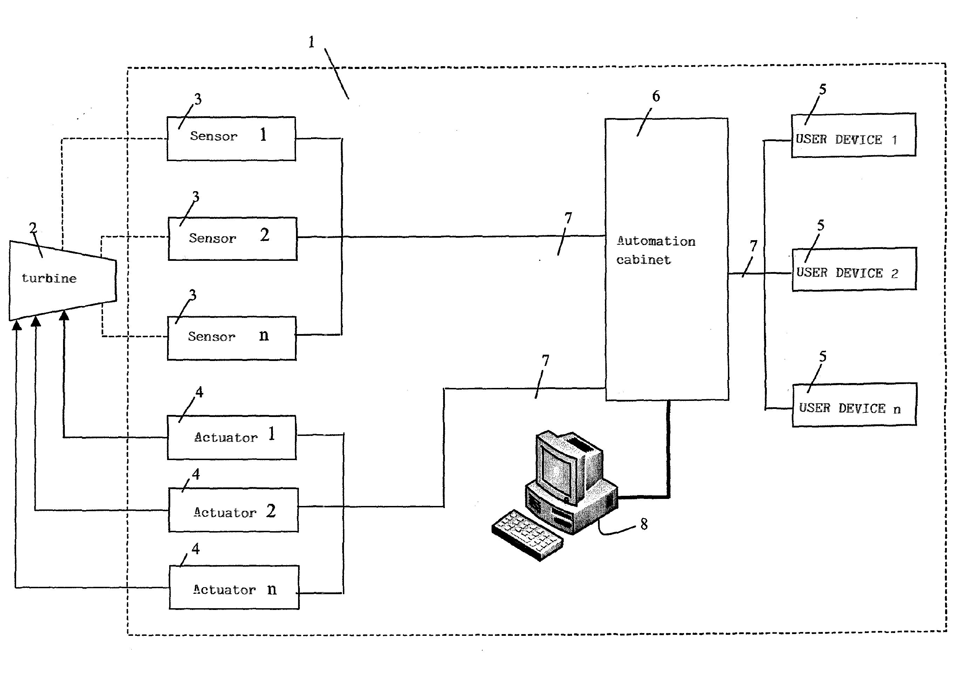

A preferred, non-limiting embodiment of the present invention will be described by way of example with reference to the accompanying drawing, which shows a block diagram of a steam turbine control system in accordance with the invention.

Number 1 in the accompanying drawing indicates, as a whole and as outlined by the dotted line, a block diagram of a system for controlling a steam turbine 2 (shown schematically), and comprising:
- a number of sensors 3 connected to steam turbine 2 to acquire characteristic operating quantities of turbine 2;
- a number of actuators 4 connected to steam turbine 2 to regulate characteristic operating quantities of turbine 2, such as opening valves admitting steam into turbine 2;
- a number of electric user devices 5 for operating a number of auxiliary systems (not shown) connected to steam turbine 2;
- an automation cabinet 6 for controlling operation of sensors 3, actuators 4, and electric user devices 5;
- a number of data buses 7, each defined, for example, by a copper cable or optical fibre, and which are configured for two-way digital signal transmission between automation cabinet 6 and: sensors 3, actuators 4, and electric user devices 5; and
- a control and processing unit 8 connected to automation cabinet 6.

More specifically, each sensor 3 is configured to acquire a characteristic operating quantity of steam turbine 2, and to supply a digital output signal indicating the quantity, and which is transmitted to automation cabinet 6 over a data bus 7 connecting each sensor 3 to automation cabinet 6.

For this purpose, sensors 3 are configured for analog/digital conversion of the acquired-quantity signals, to adapt them to the transmission characteristics of data bus 7, by which they are transmitted to automation cabinet 6 according to a predetermined communication standard.

Sensors 3, actuators 4, and electric user devices 5 may be connected over respective data buses 7 to automation cabinet 6 using, for example, so-called PROFIBUS® or FIELDBUS® technology.

PROFIBUS® technology is known in industrial applications, and provides for two-way data transmission systems at transmission speeds ranging between 9.6 Kbit/s and 12 Mbit/s, depending on the type of transmission means used for the data bus, and the distance between the data bus and the sensors connected to it. In PROFIBUS® technology, the data bus may, for example, be defined by a cable comprising two insulated copper wires, or by an optical fibre.

PROFIBUS® technology provides for connecting up to a maximum of 32 devices, e.g. sensors or measuring instruments, to the distributor, depending on the distance between the devices and the data bus.

FIELDBUS® technology is also known in industrial applications, and provides for two-way data transmission systems at transmission speeds ranging between 31.25 Kbit/s and 2.5 Mbit/s. In this case, too, transmission speed depends on the type of transmission means used for the data bus, and on the distance between the data bus and the sensors connected to it. FIELDBUS^{®} technology also provides for connecting up to a maximum of 32 devices to the distributor.

Automation cabinet 6, to which sensors 3, actuators 4, and electric user devices 5 are connected over respective data buses 7, comprises at least one electronic microprocessor processing unit (not shown) and solid-state electronic circuits (not shown) configured to implement a number of algorithms for regulating electric user devices 5 and the auxiliary systems connected to steam turbine 2, and to generate, on the basis of the regulation algorithms, control signals for controlling actuators 4 connected to turbine 2, and which are transmitted over data bus 7 to actuators 4.

Automation cabinet 6 is cable connected via an interface (not shown) to control and processing unit 8, which may be defined, for example, by one or more computers, and is configured to monitor all the characteristic operating quantities of the steam turbine, and all the devices forming part of control system 1, to allow the operator to control operation of the turbine and configure control system 1.

The invention has various advantages, including:
- a significant reduction in the number of cables connecting the sensors, measuring instruments, electric user devices, and turbine-connected actuators to the automation cabinet, thus reducing the likelihood of wiring errors, by reducing the number of connections, and also reducing breakdowns and malfunctioning, during normal operation of the steam turbine, caused by contact and/or cable anomalies, as frequently occurs in automation systems;
- faster assembly and startup of the turbine control system;
- less space required for the control system, by reducing the number of cables connecting the sensors, actuators, and electric user devices, and the number of automation cabinets for controlling input and output signals;
- less paperwork relative to electric connection of the various parts of the system, so that wiring documentation is easier to manage;
- easier system maintenance and configuration. All parts of the system in fact, can be configured directly by control and processing unit 8 in the control room.

The control system according to the invention also provides for collecting sensor performance and electric user device operating data, e.g. the number of times a valve is opened and closed; which information is particularly useful, for example, in determining the best time to carry out maintenance work.

Clearly, changes may be made to the system as described herein without, however, departing from the scope of the present invention, as defined in the accompanying Claims.

For example, the control system according to the invention may also be used to control gas turbines or any other type of turbine or device or machine forming part of an electric power system, such as combustion chambers, compressors, etc.

## Claims

1. A control system (1) for a turbine (2), comprising:
- a number of sensors (3), each for acquiring at least one characteristic operating quantity of said turbine (2), and for generating a respective first digital electric signal indicating said quantity;
- a number of actuators (4) for regulating said turbine;
- electronic processing means (6) for generating, on the basis of said first digital electric signals, second digital electric signals for controlling said actuators; and
- transmission means (7) for transmitting said first and second digital electric signals, and interposed between said sensors, said actuators, and said electronic processing means;
**characterized in that** said transmission means (7) comprise a first data bus configured to transmit said first digital electric signals to said electronic processing means (6); and a second data bus configured to transmit said second digital electric signals to said actuators.

2. A control system (1) as claimed in Claim 1, wherein said first and said second data bus (7) are each defined by an optical fibre cable or by a cable comprising two copper wires.

3. A control system (1) as claimed in Claim 1, wherein said electronic processing means (6) are configured to adapt said second digital electric signals, for controlling said actuators (4), to the transmission characteristics of said data buses (7).

4. A control system (1) as claimed in any one of the foregoing Claims, wherein said transmission means (7) for transmitting said first and second digital electric signals are formed using PROFIBUS® or FIELDBUS® technology.

5. A control system (1) as claimed in Claim 1, wherein said electronic processing means (6) are also configured to receive signals from electric user devices (5).

6. A control system (1) as claimed in Claim 5, wherein each of said electric user devices is connected to said electronic processing means (6) by a third data bus (7).
